# FASCICULE DE BREVET EUROPEEN

(11) **EP 3 374 647 B1**
(45) Date de publication et mention de la délivrance du brevet: **01.01.2020**
(21) Numéro de dépôt: 16809969.5
(22) Date de dépôt: 09.11.2016
(51) Int. Cl.: F16B 5/02, B60Q 1/04, F16B 5/06

(54) **ELEMENT DE POSITIONNEMENT D'UN COMPOSANT DANS L'ESPACE**
ELEMENT ZUR POSITIONIERUNG EINER KOMPONENTE IM RAUM
ELEMENT FOR POSITIONING A COMPONENT IN SPACE

(30) Priorité: 13.11.2015 FR 1560888
(43) Date de publication de la demande: 19.09.2018
(73) Titulaire: A Raymond Et Cie, 38000 Grenoble (FR)
(72) Inventeur: DEPAIL, Yves-Marie, 38100 Grenoble (FR); COCHARD, Mathieu, 38120 Proveysieux (FR)
(74) Mandataire: Prugneau, Philippe
(86) Numéro de dépôt international: PCT/FR2016/052901
(87) Numéro de publication internationale: WO 2017/081404

(56) Documents cités:
- EP-A1- 0 754 868
- DE-U1-202008 002 633
- FR-A1- 3 003 910
- US-A1- 2010 278 612

## Description

### Domaine technique

L'invention concerne un élément de positionnement réglable avec lequel un composant peut être positionné et fixé dans l'espace, comprenant un boulon avec lequel le composant peut être positionné dans une direction axiale du boulon, un corps creux présentant un fond annulaire traversé par le boulon, un élément de fixation avec une rondelle qui entoure le boulon et qui est agencée mobile latéralement dans le fond du corps creux par rapport à la direction axiale, la rondelle étant prévue pour être pressée dans le fond du corps creux quand l'élément de fixation est accroché au boulon de sorte à fixer en position latérale le boulon dans le corps creux.

### Technique antérieure

Il est connu d'utiliser des éléments de positionnement réglables pour fixer un composant, comme un boitier de phare, à un support comme une tôle de carrosserie d'un véhicule automobile.

Pendant l'installation du boitier de phare, un positionnement ciblé du projecteur est nécessaire avant de le fixer. Ainsi, les éléments de positionnement connus comprennent généralement un boulon creux traversé par une vis entourée d'une rondelle de fixation, un boulon de fixation formant écrou qui coopère avec le boulon creux et la rondelle de fixation.

Le boulon creux est vissé à l'intérieur d'un orifice de fixation du boitier de phare et le boulon de fixation s'accroche au boulon creux par vissage dans l'écrou. La vis sert à positionner le boulon creux suivant une direction z dans l'orifice de fixation par rapport à la carrosserie. La rondelle est serrée par vissage entre le boulon de fixation et l'écrou du boulon creux quand le positionnement dans le plan xy du boitier de phare est ajusté. Avec cet agencement, pour faire des réajustements du boulon creux dans la position z, le boulon de fixation doit toujours être desserré. Au cours du desserrage du boulon de fixation, la position xy est alors perdue. Après le réajustement de la position z, un réajustement de la position xy doit donc être à nouveau réalisé. Ces réajustements de positons entrainent des coûts élevés lors d'installation de boitiers de phare dans l'industrie automobile.

On connait du document US 8337132 un tel élément de positionnement avec lequel il est possible de modifier la position z quand la position xy est fixe ou de modifier la position xy sans modifier la position z. Néanmoins lors du démontage du composant, au cours d'une maintenance par exemple, il est nécessaire de dévisser le boulon creux et le boulon de fixation, ce qui entraine de faire un nouveau réglage de la position xy et/ou de la position z.

On connait aussi du document EP 0754868 un élément de positionnement réglable.

### Exposé de l'invention

Le but de l'invention est de proposer un autre élément de positionnement qui présente une utilisation simplifiée.

L'invention a donc pour objet un élément de positionnement réglable avec lequel un composant peut être positionné et fixé dans l'espace, comprenant un boulon avec lequel le composant peut être positionné dans une direction axiale du boulon, un corps creux présentant un fond annulaire traversé par le boulon, **caractérisé** en ce qu'il comprend un élément de fixation avec une rondelle qui est destinée à entourer le boulon et qui est agencée mobile latéralement dans le fond du corps creux, la rondelle étant prévue pour être pressée dans le fond du corps creux quand l'élément de fixation est accroché au boulon de sorte à fixer en position latérale le boulon dans le corps creux, et en ce que l'élément de fixation et le boulon sont agencés pour s'accrocher l'un à l'autre par un encliquetage réversible.

L'élément de positionnement selon l'invention peut présenter les particularités suivantes :
- l'élément de fixation peut être conformé pour pincer le boulon de façon à réaliser l'encliquetage ;
- l'élément de fixation peut comprendre une mâchoire formée par deux branches en opposition qui agissent comme des bras de levier à ressort ;
- il peut comprendre un écrou vissé sur le boulon et sur lequel peut s'encliqueter l'élément de fixation ;
- l'écrou peut être muni d'une gorge périphérique dans laquelle s'engage par pincement l'élément de fixation ;
- la rondelle peut être pressée dans le fond du corps creux par l'intermédiaire d'un élément de blocage rotatif dans le corps creux ;
- l'élément de blocage rotatif peut être une douille à baïonnette qui se verrouille dans le corps creux par rotation ;
- la rondelle et les branches peuvent être en une seule pièce ;
- l'écrou peut avoir une forme d'ogive avec un sommet qui forme une empreinte adaptée pour recevoir un outil de vissage ;
- l'élément de blocage rotatif peut former une empreinte adaptée pour recevoir un outil de vissage ;
- le corps creux peut avoir une forme de champignon évidé axialement avec une tête présentant une surface d'étanchéité et un pied comportant des crans de blocage ;
- il peut être réalisé entièrement en matière plastique.

Avec un tel élément de positionnement selon l'invention, on peut déconnecter le composant du support en séparant par un décliquetage le boulon et l'élément de fixation sans perdre le réglage du positionnement axial et latéral du boulon dans le corps creux.

Il en résulte qu'on peut remonter le composant sur le support sans effectuer un nouveau réglage en xy ou en z de l'élément de positionnement.

### Présentation sommaire des dessins

La présente invention sera mieux comprise et d'autres avantages apparaîtront à la lecture de la description qui suit et des dessins annexés dans lesquels :
- la figure 1 illustre un exemple d'élément de positionnement selon l'invention ;
- la figure 2 est une vue en éclatée de profil de la figure 1 ;
- la figure 3 est une vue en coupe axiale d'un élément de positionnement selon l'invention illustrant un positionnement d'un composant ;

- la figure 4 est une vue en perspective du corps creux de l'élément de positionnement selon l'invention ;
- les figures 5A et 5B illustrent l'écrou de l'élément de positionnement selon l'invention, respectivement selon une vue en perspective et une vue en coupe axiale ;
- les figures 6A et 6B sont respectivement une vue en perspective en une vue en coupe axiale de l'élément de fixation de l'élément de positionnement selon l'invention ;
- la figure 7 est une vue en perspective de l'élément de blocage d'un élément de positionnement selon l'invention.

### Description d'un mode de réalisation

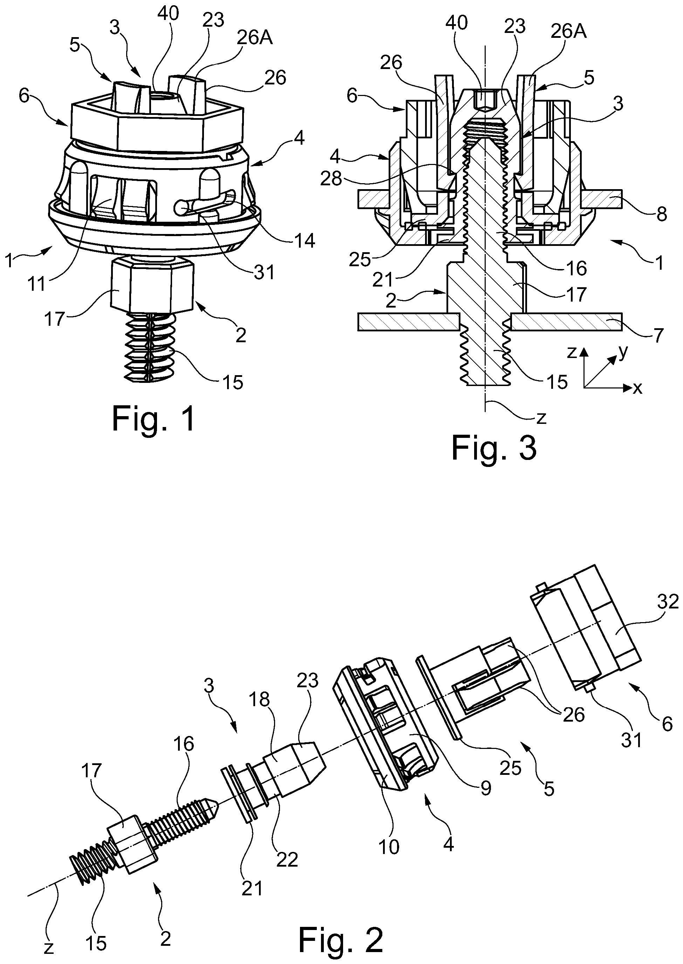

Les figures 1 et 3 illustrent un exemple de réalisation d'un élément de positionnement 1 selon l'invention avec lequel un composant, par exemple un boitier de phare d'un véhicule automobile, peut être positionné et fixé dans l'espace par rapport à un support, en l'espèce la carrosserie du véhicule automobile.

L'élément de positionnement 1 comprend plusieurs parties constitutives qui peuvent toutes être réalisées en matière plastique, par exemple par moulage par injection ou par impression 3D ou analogue.

Ces parties constitutives sont notamment montrées sur la figure 1 en position de montage et sur la figure 2 sous une forme éclatée en alignement suivant la direction axiale z.

Sur la figure 3, on a illustré l'élément de positionnement 1 selon l'invention entre un composant indiqué par la référence 7 et un support indiqué par la référence 8.

L'élément de positionnement 1 selon l'exemple de réalisation montré sur les figures 1 à 3 comprend un boulon 2, un écrou 3 qui est vissé sur le boulon 2, un corps creux 4, un élément de fixation 5 et un élément de blocage 6.

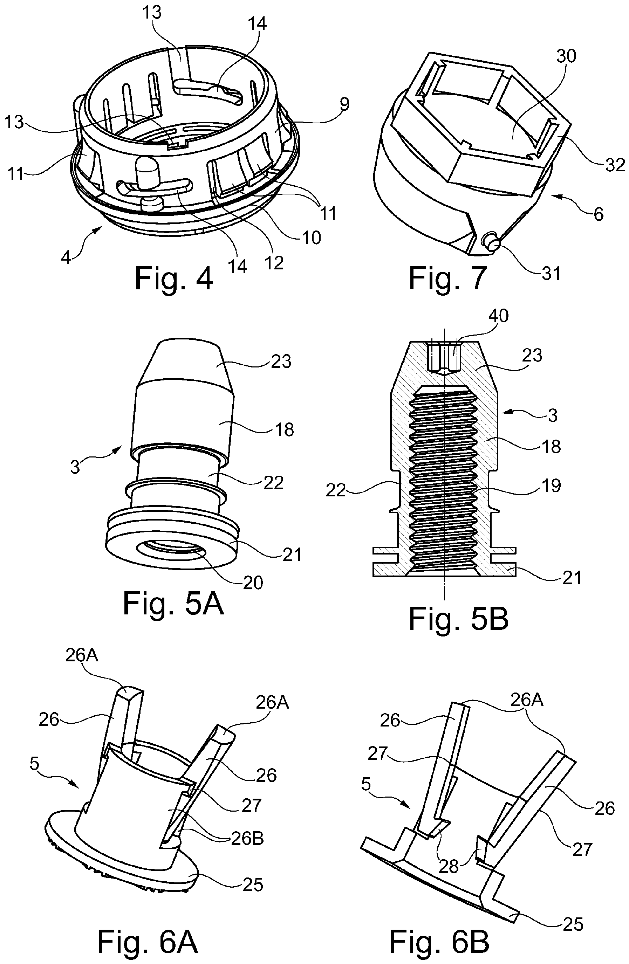

Le corps creux 4 est montré en perspective sur la figure 4.

Il est ici en forme de champignon évidé axialement. Il comporte une tête 10 évidée axialement qui présente un côté bombé tourné vers l'extérieur et un côté plat tourné vers l'intérieur qui forme une rondelle d'étanchéité venant en contact de façon étanche avec une plaque percée du support 8.

La tête 10 se prolonge axialement du côté tourné vers l'intérieur par un pied 9 qui est creux axialement avec un bord annulaire formant une sorte de traversée qui passe dans le perçage de la plaque du support 8.

L'intérieur du pied 9 forme un évidement cylindrique avec un fond plat annulaire en jointure de la tête 10 qui sert d'épaulement.

Le pied 9 creux présente une surface extérieure ici cylindrique qui est munie de plusieurs doigts flexibles 11 formant des crans de blocage disposés en espacement régulier sur une circonférence du pied 9 et à une certaine distance du côté plat de la tête 10.

Les crans de blocage 11 sont saillants au repos vers l'extérieur du pied 9 creux et sont aptes à se rétracter élastiquement et radialement vers l'intérieur du pied 9 quand le pied 9 creux est enfoncé dans le perçage de la plaque du support 8 et à revenir élastiquement à leur position de repos à la fin de l'enfoncement de sorte que les crans de blocage 11 se positionnent en appui sur le bord du perçage de la plaque du support 8 pour bloquer axialement le corps creux 4 dans la plaque du support 8.

Comme visible sur la figure 4 et selon un exemple de réalisation de l'invention, on peut prévoir des fentes inclinées 14 dans la paroi cylindrique du pied 9 creux qui servent de rainures de guidage de came. Ici on a deux fentes inclinées 14 diamétralement opposées.

Le boulon 2, visible sur les figures 2 et 3, comprend ici sur une première extrémité 15 un premier filetage destiné à être vissé dans le composant 7, et sur une seconde extrémité 16 un second filetage coopérant ici avec l'écrou 3.

Entre les premier et second filetages, le boulon 2 comprend une zone intermédiaire 17 ici à section transversale hexagonale qui sert comme surface de prise pour un vissage du boulon 2 dans le composant 7.

L'écrou 3, illustré sur les figures 5A et 5B, se présente ici comme un écrou borgne à surface extérieure 18 profilée en forme d'ogive et il est muni à l'intérieur d'un alésage fileté 19 qui coopère avec la partie filetée 16 du boulon 2.

L'ouverture 20 de l'écrou 3 est bordée par une couronne plate 21 qui s'étend radialement vers l'extérieur de l'ouverture 20. Quand l'écrou 3 est enfoncé dans le corps creux 4 à travers la tête 10, la couronne plate 21 se positionne à l'intérieur du côté bombé de la tête 10 du corps creux 4.

La surface extérieure de l'écrou 3 forme ici dans une zone médiane une gorge 22 annulaire périphérique à bords droits pour un accrochage.

L'écrou 3 en forme d'ogive a ici un sommet tronconique fermé 23 qui définit une empreinte 40 adaptée pour recevoir un outil de vissage (ici une clé à six pans) de façon à être entraîné en rotation pour être déplacé axialement le long du boulon 2.

Selon l'invention, l'élément de fixation 5 et le boulon 2 sont conçus et adaptés pour s'accrocher l'un à l'autre par un encliquetage réversible assurant un verrouillage suivant la direction axiale z.

Pour réaliser facilement l'accrochage par encliquetage, l'élément de fixation 5 peut être conformé pour pincer élastiquement la surface extérieure du boulon 2.

Dans le cas d'exemple, l'élément de fixation 5 comprend une mâchoire formée par deux branches 26 en opposition qui agissent comme des bras de levier à ressort.

Dans l'exemple de réalisation, les deux branches 26 sont solidaires de la rondelle 25 qui entoure la seconde extrémité 16 du boulon 2 quand celui-ci est enfoncé dans le corps creux 4, cette rondelle 25 étant mobile latéralement en xy dans le fond annulaire du corps creux 4 par rapport à la direction axiale z.

L'élément de fixation 5 montré ici sur les figures 6A et 6B comporte ici un manchon coaxial à la rondelle 25 avec un diamètre extérieur plus petit que le diamètre extérieur de la rondelle 25, le manchon et la rondelle 25 étant d'une seule pièce.

Comme visible sur ces figures 6A et 6B, le manchon de l'élément de fixation 5 forme dans son épaisseur les deux branches 26 qui ont une partie postérieure (arrière) agissant comme un bras de levier à ressort et une partie antérieure (avant) qui forme une partie de mâchoire.

Dans l'exemple, chaque branche 26 comporte une zone d'articulation en rotation 27 qui est reliée au manchon et qui est apte à se déformer élastiquement par torsion élastique.

La partie antérieure (avant) des branches 26 a une extrémité libre formant un crochet 28 qui est destiné à s'engager dans la gorge 22 annulaire de l'écrou 3 pour s'accrocher sur les bords droits de cette gorge 22.

La partie postérieure (arrière) 26A des branches 26 s'étend obliquement le long de la direction axiale z à l'extérieur du manchon de l'élément de fixation 5 et au-dessus de celui-ci de sorte que les deux parties postérieures 26A des deux branches 26 peuvent être facilement rapprochées manuellement l'une de l'autre pour écarter les extrémités en forme de crochet 28 à angle droit formant la mâchoire de telle sorte à libérer l'accrochage avec l'écrou 3. Lorsqu'elles sont relâchées, les deux parties postérieures 26A des deux branches 26 s'écartent l'une de l'autre ce qui entraîne la fermeture de la mâchoire.

Dans l'exemple de réalisation, la zone d'articulation 27 a un effet ressort et est constituée par la matière du bord supérieur du manchon de l'élément de fixation 5 et les crochets 28 des branches 26 se projettent radialement vers l'intérieur du manchon à travers des lumières 26B formées dans la surface cylindrique du manchon de l'élément de fixation 5.

L'élément de blocage 6 illustré de façon isolée sur la figure 7 se présente comme une sorte de douille cylindrique à baïonnette comportant un alésage axial 30. L'élément de blocage 6 est prévu pour s'insérer axialement dans le corps creux 4 autour de l'élément de fixation 5 pour serrer la rondelle 25 contre l'épaulement annulaire du corps creux 4.

Comme visible sur la figure 7, l'élément de blocage 6 en forme de douille à baïonnette comporte deux ergots 31 diamétralement opposés qui saillent radialement pour s'engager respectivement dans les fentes inclinées 14 ou rainures de guidage de came ménagées dans le pied 9 du corps creux 4.

La douille à baïonnette 6 a une base annulaire qui a un diamètre intérieur qui est inférieur au diamètre extérieur de la rondelle 25 mais qui est supérieur à celui du manchon de l'élément de fixation 5. La douille à baïonnette 6 a ici une surface extérieur 32 qui forme une empreinte ici hexagonale destinée à coopérer avec un outil afin d'appliquer à l'élément de blocage 6 une rotation angulaire dans le corps creux 4, cette rotation entraînant par un effet de came des ergots 31 dans les fentes 14, un déplacement axial de l'élément de blocage 6 vers le fond du corps creux 4 et un serrage de la rondelle 25 entre la douille à baïonnette 6 et le fond du corps creux 4. Le serrage est ici réalisé par une rotation angulaire d'un huitième de tour de la douille à baïonnette 6.

On pourrait avoir un élément de blocage 6 de forme différente, par exemple un boulon creux qui se visse dans un filetage du corps creux.

Le principe d'utilisation de l'élément de positionnement 1 est le suivant.

Le corps creux 4 en forme de champignon est d'abord inséré axialement bloqué dans un trou circulaire du support 8. La tête 10 du corps creux 4 vient en appui contre une face du support 8 et assure une étanchéité aux ruissellements à travers le trou circulaire.

L'élément de fixation 5 avec les branches 26 à bras de levier est ensuite inséré à l'intérieur du pied 9 du corps creux 4, la rondelle 25 reposant à plat sur le fond annulaire du corps creux 4.

L'élément de blocage 6 en forme de douille à baïonnette est ensuite mis en place dans le corps creux 4 lequel est muni de deux rainures axiales diamétralement opposées (désignées par 13 sur la figure 4) qui sont formées dans la surface intérieure du pied et qui débouchent dans les fentes 14 de sorte à pouvoir amener par une translation axiale les ergots 31 en haut des fentes 14 du corps creux 4.

Dans cette position, la rondelle 25 de l'élément de fixation n'est pas serrée dans le fond du corps creux 4 et donc l'élément de fixation 5 peut se déplacer librement latéralement dans le fond du corps creux 4.

Maintenant, le boulon 2 est fixé au composant par vissage et est revêtu de l'écrou 3 profilé qui est vissé au maximum jusqu'à la zone intermédiaire 17.

L'écrou 3 profilé en forme d'ogive vissé sur le boulon 2 (et avec le composant) est présenté face à la tête 10 du corps creux 4 et l'écrou 3 profilé est inséré à travers celle-ci dans le pied 9 du corps creux 4. L'extrémité tronconique de l'écrou 3 profilé pénètre alors dans le manchon de l'élément de fixation 5, écarte élastiquement les parties antérieures (avant) des deux branches 26 jusqu'au moment où celles-ci viennent pincer la gorge 22 et s'y accroche par encliquetage.

A ce moment, le boulon 2 avec l'écrou 3 est verrouillé suivant la direction axiale z avec la rondelle 25 de l'élément de fixation 5.

Dans cette position de l'élément de positionnement 1, il est possible d'ajuster manuellement la position du composant 7 par rapport au support 8 suivant la direction axiale z (voir figure 3) en appliquant une rotation (dévissage/vissage) sur l'écrou 3 avec un outil en prise avec l'empreinte 24.

La position z étant réglée, il est possible maintenant d'ajuster la position latérale (par rapport à l'axe z) du composant 7 suivant les directions xy (voir figure 3) en déplaçant latéralement la rondelle 25 dans le fond du corps creux 4.

Quand la position latérale en xy appropriée est réglée, on applique une rotation sur l'élément de blocage 6 en forme de douille à baïonnette qui vient alors serrer la rondelle 25 dans le fond du corps creux 4.

Après quoi le boulon 2 et donc le composant 7 est maintenu positionné et fixé dans l'espace par rapport au support 8 selon les trois directions x,y et z.

Cet agencement a pour avantage de rendre possible le démontage du boulon 2 hors du corps creux 4 sans modifier les réglages en xyz du fait de l'encliquetage réversible. En effet, il suffit de décliqueter les branches 26 à bras de levier de la gorge 22 en les rapprochant l'une de l'autre pour écarter les crochets 28 et les séparer de la gorge 22.

L'écrou 3 profilé avec le boulon 2 peuvent alors être sortis axialement du corps creux 4, puis de nouveau être insérés axialement (par exemple après une intervention sur le composant 8) dans le corps creux 4 en conservant les réglages de positionnement en xyz.

Il est entendu que l'agencement de l'élément de positionnement 1 selon l'invention permet aussi un réglage de position en xy et ensuite un réglage de position en z.

Les différentes parties 2,3,4,5,6 de l'élément de positionnement 1 selon l'invention peuvent être fabriquées à faible coût par moulage de matière plastique et même s'il s'agit d'une fabrication en petites séries par exemple par addition de matière dans une imprimante 3D.

Il est à noter que les différentes parties de l'élément de positionnement 1 selon l'invention pourraient avoir une forme différente de celle présentée sur les dessins du moment que l'accrochage du boulon 2 avec l'élément de fixation 5 à rondelle soit réalisé par un encliquetage réversible.

Par exemple l'élément de fixation 5 pourrait avoir qu'une seule branche 26 à bras de levier.

L'encliquetage pourrait aussi se faire par un anneau élastique type "circlip" ou analogue.

## Revendications

1. Elément de positionnement réglable (1) avec lequel un composant (7) peut être positionné et fixé dans l'espace, comprenant un boulon (2) avec lequel ledit composant (7) peut être positionné dans une direction axiale (z) dudit boulon (2), un corps creux (4) présentant un fond annulaire traversé par ledit boulon (2), **caractérisé en ce que** qu'il comprend un élément de fixation (5) avec une rondelle (25) qui entoure ledit boulon (2) et qui est agencée mobile latéralement dans ledit fond du corps creux (4) par rapport à ladite direction axiale, ladite rondelle (25) étant prévue pour être pressée dans ledit fond dudit corps creux (4) quand ledit élément de fixation (5) est accroché audit boulon (2) de sorte à fixer en position latérale ledit boulon (2) dans ledit corps creux (4), et **en ce que** ledit élément de fixation (5) et ledit boulon (2) sont agencés pour s'accrocher l'un à l'autre par un encliquetage réversible.

2. Elément de positionnement (1) selon la revendication 1, **caractérisé en ce que** ledit élément de fixation (5) est conformé pour pincer ledit boulon (2) de façon à réaliser l'encliquetage.

3. Elément de positionnement (1) selon la revendication 2, **caractérisé en ce que** ledit élément de fixation (5) comprend une mâchoire formée par deux branches (26) en opposition qui agissent comme des bras de levier à ressort.

4. Elément de positionnement (1) selon la revendication 2, **caractérisé en ce qu'**un écrou (3) est vissé sur ledit boulon (2) et **en ce que** ledit élément de fixation (5) est encliqueté sur ledit écrou (3).

5. Elément de positionnement (1) selon la revendication 4, **caractérisé en ce que** ledit écrou (3) est muni d'une gorge périphérique (22) dans laquelle s'engage par pincement ledit élément de fixation (5).

6. Elément de positionnement (1) selon la revendication 1, **caractérisé en ce que** ladite rondelle (25) est pressée dans ledit fond dudit corps creux (4) par l'intermédiaire d'un élément de blocage (6) rotatif dans ledit corps creux (4).

7. Elément de positionnement (1) selon la revendication 5, **caractérisé en ce que** ledit élément de blocage rotatif (6) est une douille à baïonnette qui se verrouille dans ledit corps creux (4) par rotation.

8. Elément de positionnement (1) selon la revendication 3, **caractérisé en ce que** ladite rondelle (25) et lesdites branches (26) sont en une seule pièce.

9. Elément de positionnement (1) selon la revendication 4, **caractérisé en ce que** ledit écrou (2) a une forme d'ogive avec un sommet qui forme une empreinte (40) adaptée pour recevoir un outil de vissage.

10. Elément de positionnement (1) selon la revendication 6, **caractérisé en ce que** ledit élément de blocage rotatif (6) forme une empreinte adaptée pour recevoir un outil de vissage.

11. Elément de positionnement (1) selon l'une quelconque des revendications précédentes, **caractérisé en ce que** ledit corps creux (4) a une forme de champignon évidé axialement avec une tête (10) présentant une surface d'étanchéité et un pied (9) comportant des crans de blocage.

12. Elément de positionnement (1) selon l'une des revendications précédentes, **caractérisé en ce qu'**il est réalisé entièrement en matière plastique.

## Patentansprüche

1. Einstellbares Positionierelement (1), mit dem eine Komponente (7) im Raum positioniert und fixiert werden kann, umfassend einen Bolzen (2), mit dem die Komponente (7) in eine axiale Richtung (z) des Bolzens (2) positioniert werden kann, einen hohlen Korpus (4), der einen ringförmigen Grund aufweist, der von dem Bolzen (2) durchsetzt ist, **dadurch gekennzeichnet,**
**dass** es ein Fixierelement (5) mit einer den Bolzen (2) umgebenden Scheibe (25), die in Bezug auf die axiale Richtung in dem Grund des hohlen Korpus (4) seitwärts beweglich verlagerbar ist, umfasst, wobei die Scheibe (25) vorgesehen ist, um in den Grund des hohlen Korpus (4) gepresst zu werden, wenn das Fixierelement (5) an den Bolzen (2) derart angeschlossen wird, um die seitliche Position des Bolzens (2) in dem hohlen Korpus (4) zu fixieren, und dass das Fixierelement (5) und der Bolzen (2) ausgebildet sind, um sich gegenseitig durch reversibles Verrasten zu befestigen.

2. Positionierelement (1) nach Anspruch 1, **dadurch gekennzeichnet, dass** das Fixierelement (5) ausgebildet ist zum Klemmen des Bolzens (2) zum Verwirklichen der Verrastung.

3. Positionierelement (1) nach Anspruch 2, **dadurch gekennzeichnet, dass** das Fixierelement (5) eine durch zwei gegenüberliegende Schenkel (26) gebildete Klaue umfasst, welche wie federnde Hebelarme wirken.

4. Positionierelement (1) nach Anspruch 2, **dadurch gekennzeichnet, dass** eine Mutter (3) auf den Bolzen (2) geschraubt ist, und dass das Fixierelement (5) auf der Mutter (3) verrastet ist.

5. Positionierelement (1) nach Anspruch 4, **dadurch gekennzeichnet, dass** die Mutter (3) mit einer umlaufenden Nut (22) versehen ist, in die das Fixierelement (5) klemmend eindringt.

6. Positionierelement (1) nach Anspruch 1, **dadurch gekennzeichnet, dass** die Scheibe (25) in den Grund des hohlen Korpus (4) mittels eines rotierbaren Blockierelements (6) in dem hohlen Korpus (4) gepresst ist.

7. Positionierelement (1) nach Anspruch 5, **dadurch gekennzeichnet, dass** das rotierbare Blockierelement (6) eine Bajonett-Hülse ist, die sich in dem hohlen Korpus (4) durch Verdrehung verriegelt.

8. Positionierelement (1) nach Anspruch 3, **dadurch gekennzeichnet, dass** die Scheibe (25) und die Schenkel (26) einteilig ausgebildet sind.

9. Positionierelement (1) nach Anspruch 4, **dadurch gekennzeichnet, dass** die Mutter (2) die Gestalt eines Geschosses mit einem Gipfel aufweist, der eine für die Aufnahme eines Schraubwerkzeugs angepasste Vertiefung (40) aufweist.

10. Positionierelement (1) nach Anspruch 6, **dadurch gekennzeichnet, dass** das rotierbare Blockierelement (6) eine zur Aufnahme eines Schraubwerkzeugs ausgebildete Vertiefung bildet.

11. Positionierelement (1) nach einem der vorhergehenden Ansprüche, **dadurch gekennzeichnet, dass** der hohle Korpus (4) die Gestalt eines axial ausgehöhlten Pilzes aufweist, mit einem Kopf (10), der eine Abdichtoberfläche aufweist, und einem Fuß (9), der Blockierrasten umfasst.

12. Positionierelement (1) nach einem der vorhergehenden Ansprüche, **dadurch gekennzeichnet, dass** es vollständig aus Kunststoffmaterial hergestellt ist.

## Claims

1. An adjustable positioning element (1) enabling a component (7) to be positioned and fastened in three dimensions, the element comprising a bolt (2) with which said component (7) can be positioned in an axial direction (z) of said bolt (2), and a hollow body (4) presenting an annular end wall through which said bolt (2) passes, the element being **characterized in that** it further comprises a fastener element (5) with a washer (25) that surrounds said bolt (2) and that is arranged to be movable sideways in said end wall of the hollow body (4) relative to said axial direction, said washer (25) being designed to be pressed into said end wall of said hollow body (4) when said fastener element (5) is attached to said bolt (2) in such a manner as to fix the lateral position of said bolt (2) in said hollow body (4), and **in that** said fastener element (5) and said bolt (2) are arranged to attach to each other by reversible snap-fastening.

2. A positioning element (1) according to claim 1, **characterized in that** said fastener element (5) is shaped to clamp said bolt (2) so as to provide the snap-fastening.

3. A positioning element (1) according to claim 2, **characterized in that** said fastener element (5) comprises a jaw formed by two opposite branches (26) that act as spring lever arms.

4. A positioning element (1) according to claim 2, **characterized in that** a nut (3) is screwed onto said bolt (2) and **in that** said fastener element (5) is snap-fastened on said nut (3).

5. A positioning element (1) according to claim 4, **characterized in that** said nut (3) is provided with a peripheral groove (22) in which said fastener element (5) is engaged by clamping.

6. A positioning element (1) according to claim 1, **characterized in that** said washer (25) is pressed into said end wall of said hollow body (4) by a blocking element (6) that can turn in said hollow body (4).

7. A positioning element (1) according to claim 5, **characterized in that** said turnable blocking element (6) is a bayonet bushing that locks in said hollow body (4) by being turned.

8. A positioning element (1) according to claim 3, **characterized in that** said washer (25) and said branches (26) comprise a single part.

9. A positioning element (1) according to claim 4, **characterized in that** said nut (2) is bullet-shaped with a top that includes a socket (40) suitable for receiving a screw-turner tool.

10. A positioning element (1) according to claim 6, **characterized in that** said turnable blocking element (6) forms a socket suitable for receiving a screw-turner tool.

11. A positioning element (1) according to any preceding claim, **characterized in that** said hollow body (4) is in the form of an axially hollowed-out mushroom with a head (10) presenting a sealing surface and a stem (9) including blocking catches.

12. A positioning element (1) according to any preceding claim, **characterized in that** it is made entirely out of plastics material.
